# EUROPEAN PATENT SPECIFICATION

(11) **EP 2 082 122 B1**
(45) Date of publication and mention of the grant of the patent: **23.04.2014**
(21) Application number: 06799766.8
(22) Date of filing: 16.10.2006
(51) Int. Cl.: F01N 3/20, B01D 53/90

(54) **UREA SUPPLY SYSTEM**
HARNSTOFFZUFÜHRSYSTEM
SYSTÈME D'ALIMENTATION EN URÉE

(43) Date of publication of application: 29.07.2009
(73) Proprietor: Volvo Lastvagnar AB, 405 08 Göteborg (SE)
(72) Inventor: SKARBY, Torbjörn, 541 54 Skövde (SE)
(74) Representative: Fröhling, Werner Otto
(86) International application number: PCT/SE2006/001166
(87) International publication number: WO 2008/048147

(56) References cited:
- WO-A1-2006/074833
- DE-A1- 4 432 576

## Description

### FIELD OF THE INVENTION

The present invention relates to a pump system for injecting a urea solution into an exhaust system of an internal combustion engine. The pump system comprises a urea tank, a urea pump, and an injection point in the exhaust system.

### PRIOR ART

Today, ever-stricter demands on exhaust emission levels require engine manufacturers to deploy different kinds of exhaust cleaning systems. For spark ignition engines, the problems with exhaust levels have more or less been solved by the provision of three-way catalysts in the exhaust system.

For diesel, or compression ignition (CI), engines, there are however some major problems remaining to be solved, namely the emissions of soot and nitric oxides (NOₓ) and their inherent connection to engine fuel consumption; as is well known by persons skilled in the art, NOₓ emission increases with improved fuel consumption and less soot emissions. If fuel consumption and soot emissions were not an issue, it would be very easy to reduce emissions of NOₓ, and oppositely, if NOₓ emissions are not an issue, it is very easy to improve fuel consumption and reduce soot emissions.

In order to achieve an engine having low emissions of NOₓ and simultaneously a good fuel economy and low soot emissions, exhaust treatment systems being able to convert NOₓ emissions have been developed. There are mainly two types of such systems, namely SCR systems using ammonia or urea as a reactant in a catalyst, and NOₓ traps "trapping" NOₓ in a NOₓ storage catalyst, which later is "renewed" by a "chock" of high temperature exhausts having a high content of hydrocarbons and low or no content of oxygen. This invention relates to a urea delivery pump for SCR systems.

For SCR systems, there is a flow of urea added to the exhaust system during periods of high NOₓ production, i.e. during periods of high engine output. During periods of low engine output, no urea is added to the exhausts, since engine out emissions of NOₓ is low at such conditions. This leads to a problem concerning the urea nozzle injecting urea into the exhausts; engine exhausts are generally rather hot. In fact, exhaust temperatures from a CI engine range from about 200 to 700 degrees C. During the periods of urea injection, there is usually no problem with the urea-injecting nozzle, but during the periods where no urea is injected, a severe problem concerning clogging of the nozzle has been discovered. The clogging of the nozzle results from urea remaining in the nozzle from previous injections, which urea dries, melts and forms crystals in the nozzle, which leads to the nozzle blocking.

Document WO 2006/074833 A shows a device for treating exhaust gases of an internal combustion engine while using a reactant, the reactant is pumped by means of pump system , and an injection point in the exhaust system, a valve movable between a first position, in which the valve connects the pump for pumping the reactant and the injection point, and a second position in which the valve connects the injection point to an air supply.

EP 1 672 192 describes a method for controlling injection of reducing agent in exhaust gas from a combustion engine. Fig. 1 of EP 1 672 192 implies that compressed air is mixed with the reducing agent being injected, and in paragraph 31, it is stated that "The air from air compressor 9 to urea is used for pushing the urea solution through nozzle 6 and for obtaining a good atomization of the solution". The problem with nozzle fouling and blocking is not addressed.

EP 1 612 381 discloses a system for injecting a urea solution into the exhaust gas manifold of a diesel engine. The system comprises a small supply tank, which is maintained under pressure by a compressed air line. A bypass line from the supply tank opens close to an injector injecting the urea into the exhaust system. The purpose of the airline opening close to the injector nozzle is to help vaporizing the urea.

The problem of nozzle fouling is not in any way addressed in EP 1 612 381.

The object of the invention is to present a system and a method for urea injection that minimizes nozzle fouling.

### SUMMARY OF THE INVENTION

The present invention is solved by a pump system for injecting a substance into an exhaust system of an internal combustion engine. The pump system,could comprise a tank for the substance to be injected, a pump for pumping the substance, and an injection point in the exhaust system. A slide valve is movable between a first position, in which the slide valve connects the pump for pumping the substance and the injection point, and a second position, in which the slide valve connects the injection point to an air supply.

In order to facilitate control of the pump system, an actuator could be connected to the slide valve such that the actuator forces the slide valve to assume the first position when an air pressure is applied to the actuator.

For achieving a good control of the injected amount of the substance, the pump system could further comprise an electrically operated valve arranged in the communication between the urea pump and the injection point. The electrically controlled valve might fine-tune the injected amount by pulse width modulation.

In order to even out pressure fluctuations induced by the pump, a bellows could be placed between the slide valve and the pump.

For enabling a rapid start-up of the pump system, a check valve could be situated between the slide valve and the pump.

It might be advantageous if the check valve is situated between the bellows and the slide valve.

The problem with the prior art is also solved by a method comprising the steps of:
i. supplying the reductant through the injection point during the period wherein an injection of reductant is required;
ii. switching a valve to close the supply of reductant to the injection point and open a supply of pressurized air to the injection point;
iii.allowing the supply of pressurized air to induce an air flow through the injection point; and
iv. closing the supply of pressurized air.

### BRIEF DESCRIPTION OF THE DRAWINGS

The invention will now be explained with reference to the appended drawings, wherein:
Fig. 1 is a schematic view showing a system for urea injection according to the present invention, and
Fig. 2 is a schematic view showing a valve for blowout of urea according to the present invention.

### DESCRIPTION OF EMBODIMENTS

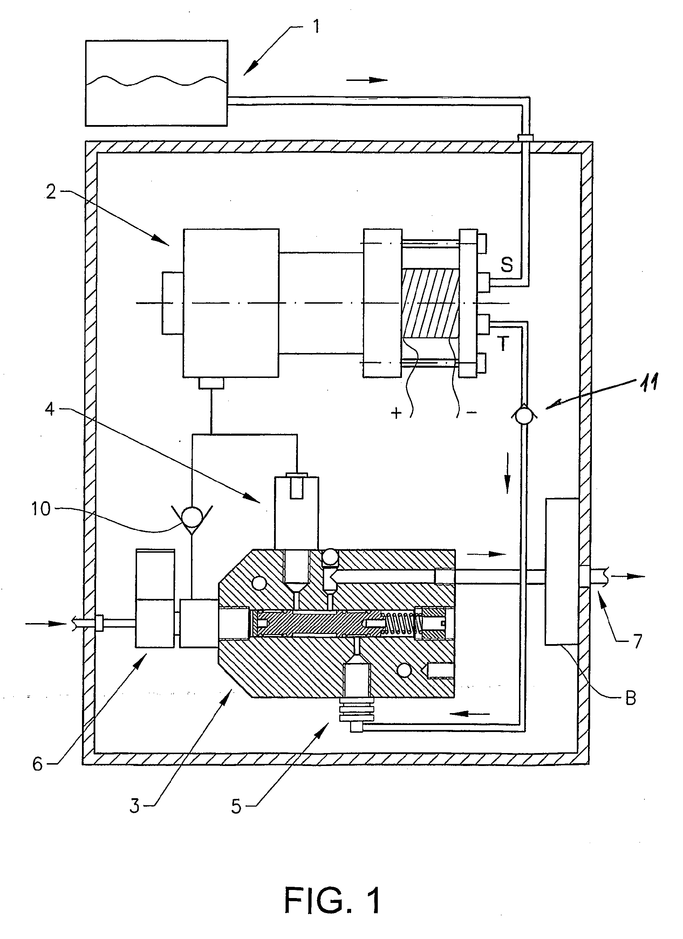

In Fig. 1, a supply system for urea injection into an exhaust system of a combustion engine is shown. The system comprises a urea tank 1 connected to an inlet S of a urea pump 2, whose function will be described later. An outlet T is connected to a slide valve 3 via a bellows 5. A heating coil is arranged circumferentially around the pump chamber of the pump 2 and connected an electricity supply.

An optional one-way valve 11 could be provided in the connection between the outlet T and the slide valve 3, preferably between the bellows 5 and the slide valve 3. A slide Air Control Valve, ACV, is connected to an actuator 6. The slide valve 3 is also connected to an air tank 4, which is supplied with air from the actuator 6 via a check valve 10, which allows air flow in the direction from the actuator 6 to the air tank 4 only. The actuator 6 is able to move the slide ACV between a position allowing a flow of urea from the bellows 5 to an injection point 7, preferably located in the exhaust system and provided with an optional electrically operated valve B, and a position where a flow of air from the air tank 4 to the injection point 7 is enabled. Moreover, there is an air connection allowing a flow of air from the actuator 6 to the urea pump 2.

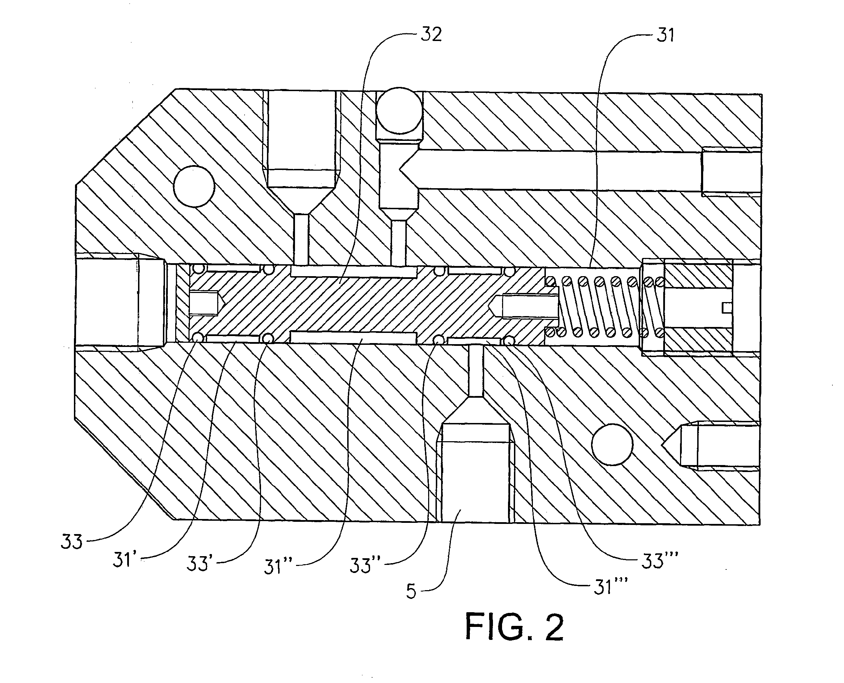

In Fig. 2, the slide ACV is shown in a larger view. The bellows 5 opens in a wall of a cylinder 31, which houses a cylindrical movable valve member 32. Moreover, the cylinder wall is provided with openings connecting the interior of the cylinder with the injection point 7 and the air tank 4. The valve member 32 comprises four O-rings 33, 33', 33" and 33"', which O-rings, in combination with the outer wall of the valve member 32 and the inner wall of the cylinder 31, delimits three spaces 31', 31" and 31"'. The spaces are shellformed and reach all around the circumference of the valve member 32.

The openings connecting the interior of the cylinder 31 with the injection point 7, the bellows 5 and the air tank 4, are placed on various longitudinal positions along the cylinder 31. Hence, it is possible to achieve three different valve positions by moving the valve member back and forth in the cylinder 31:
1. In a first position, i.e. when the valve member 32 is positioned as far to the left as possible, the air tank 4 is communicating with the injection point 7, since both the opening communicating with the air tank and the opening communicating with the injection point will open in the space 31" when the valve member is in such position.
2. in a second position, where the valve member 32 is positioned as far to the right as possible, the bellows 5 is communicating with the injection point 7, since the space 31" will be in communication with both the opening connected to the bellows 5 and the opening communicating with the injection point 7.
3. In an intermediate position, the valve member will be placed such that the opening to the air tank 4 will open in the space 31', the opening communicating with the injection point 7 will open in the space 31" and the opening communicating with the bellows will be communicating with the space 31"'. Since there is no communication between the spaces 31', 31" and 31"', the valve member will shutdown all communications between the openings in this position.

For operation of the system, the actuator 6 is fed with pressurized air. The pressurized air will force a piston assembly (not shown) connected to the valve member 32 to the right, hence forcing the valve member to assume the second position. Simultaneously, air will flow through the check valve 10, hence filling the air tank 4 with pressurized air and energizing the urea pump 2. Consequently, urea will be drawn from the urea tank 1 to the urea pump 2, continue to the bellows 5, the space 31" and ultimately to the injection point 7; this is enabled by the valve member being positioned in its right-hand position, i.e. the second position according to the above. The optional electrically controlled valve B may be "pulse" regarding its opening time, a method known as pulse width modulation, PWM, or frequency modulated, to fine-tune the amount of urea injected through the injection point.

After a driving sequence demanding urea injection to reduce NOₓ emissions, the injection sequence is terminated by terminating the feed of pressurized air to the actuator 6. The termination of the air feed will stop the urea pump 2 and release the pressure on the piston connected to the valve member 32, whereupon the valve member will move to the left and terminate the communication between the bellows 5 and the injection point 7. Due to the provision of the one-way 11, the pressure in the bellows 5 will remain, which will decrease the response time for a subsequent urea injection. As the valve member has reached its leftmost position, the air tank 4 will be communicated to the injection point 7, and since there is an air pressure in the air tank 4 remaining from the tank previously being filled with pressurized air, the air in the air tank 4 will be pressed out through the injection point 7. As could be understood, the air will rinse the injection point from urea, which will minimize fouling of the injection point, since no urea will be left in the injection point after a period of urea injection.

There are many variants possible within the scope of the invention such as it is defined in the appended claims.

For example, the tank 4 might be omitted; instead, the slide valve might be connected directly to a system for pressurized air. In such a design, the optional electrically operated valve B could be used to terminate the airflow from the system for pressurized air through the injection point 7.

Another option might be to use a urea pump powered by electricity.

Another possible modification is to provide the inlet of the tank 4 with a restriction restricting an airflow to and from the tank.

Finally, the medium to be injected must not necessarily be urea; in some cases, it might be better to use another substance, e.g. vaporized urea, ammonia, any other reductant or other substance enabling any kind of exhaust conversion in the exhaust, such as e.g. substances allowing soot to burn off from a soot filter.

## Claims

1. Pump system for injecting a substance into an exhaust system of an internal combustion engine, said pump system comprising a tank (1) for the substance to be injected, a pump (2) for pumping the substance, and an injection point (7) in the exhaust system, a slide valve (3) movable between a first position, in which the slide valve (3) connects the pump (2) for pumping the substance and the injection point (7), and a second position, in which the slide valve connects the injection point (7) to an air supply (4), **characterized in that** an actuator (6) is connected to the slide valve such that the actuator forces the slide valve to assume the first position when an air pressure is applied to the actuator.

2. The pump system of claim 1, further comprising an electrically operated valve (B) arranged in a the communication between the urea pump (2) and the injection point (7), said valve (B) enabling a fine-tuning of the injected amount of urea by pulse width modulation or frequency modulation.

3. The pump system of any preceding claim, wherein a bellows (5) is placed between the slide valve (3) and the pump (2).

4. The pump system of any preceding claim, further comprising a check valve (11) situated between the slide valve (3) and the pump (2).

5. The pump system of claim 3 and 4, wherein the check valve (11) is situated between the bellows (5) and the slide valve (3).

6. The pump system according to any of the preceding claims, wherein the air supply (4) is an air tank.

7. The pump system according to any of the preceding claims, wherein the reductant is urea.

## Patentansprüche

1. Pumpsystem zur Einspritzung einer Substanz in ein Abgassystem eines Verbrennungsmotors, wobei das Pumpsystem einen Tank (1) für die einzuspritzende Substanz, eine Pumpe (2) zum Pumpen der Substanz, eine Einspritzstelle (7) in dem Abgassystem und ein Schiebeventil (3) umfasst, das zwischen einer ersten Position, in der das Schiebeventil (3) die Pumpe (2) zum Pumpen der Substanz und die Einspritzstelle (7) verbindet, und einer zweiten Position bewegbar ist, in der das Gleitventil die Einspritzstelle (7) mit einer Luftzufuhr (4) verbindet, **dadurch gekennzeichnet, dass** ein Stellglied (6) mit dem Schiebeventil so verbunden ist, dass das Stellglied das Schiebeventil dazu zwingt, die erste Position einzunehmen, wenn ein Luftdruck an das Stellglied aufgebracht wird.

2. Pumpsystem nach Anspruch 1, das außerdem ein elektrisch betätigtes Ventil (B) umfasst, das in einer Verbindung zwischen der Harnstoffpumpe (2) und der Einspritzstelle (7) angeordnet ist, wobei das Ventil (B) eine Feineinstellung der eingespritzten Menge an Harnstoff durch Pulsweitenmodulation oder Frequenzmodulation ermöglicht.

3. Pumpsystem nach irgendeinem vorhergehenden Anspruch, wobei ein Balg (5) zwischen dem Gleitventil (3) und der Pumpe (2) angeordnet ist.

4. Pumpsystem nach irgendeinem vorhergehenden Anspruch, das außerdem ein Rückschlagventil (11) umfasst, das zwischen dem Gleitventil (3) und der Pumpe (2) angeordnet ist.

5. Pumpsystem nach Anspruch 3 und 4, wobei das Rückschlagventil (11) zwischen dem Balg (5) und dem Gleitventil (3) angeordnet ist.

6. Pumpsystem nach irgendeinem der vorhergehenden Ansprüche, wobei die Luftzufuhr (4) ein Lufttank ist.

7. Pumpsystem nach irgendeinem der vorhergehenden Ansprüche, wobei das Reduktionsmittel Harnstoff ist.

## Revendications

1. Système de pompe permettant d'injecter une substance dans un système d'échappement d'un moteur à combustion interne, ledit système de pompe comprenant un réservoir (1) pour la substance à injecter, une pompe (2) destinée à pomper la substance, et un point d'injection (7) dans le système d'échappement, une vanne à tiroir (3) pouvant se déplacer entre une première position, dans laquelle la vanne à tiroir (3) relie la pompe (2) destinée à pomper la substance et le point d'injection (7), et une deuxième position, dans laquelle la vanne à tiroir relie le point d'injection (7) à une alimentation en air (4), **caractérisé en ce qu'**un actionneur (6) est relié à la vanne à tiroir de sorte que l'actionneur force la vanne à tiroir à adopter la première position lorsqu'une pression d'air est appliquée à l'actionneur.

2. Système de pompe de la revendication 1, comprenant en outre une électrovanne (B) agencée dans la communication entre la pompe d'urée (2) et le point d'injection (7), ladite vanne (B) permettant un réglage précis de la quantité injectée d'urée par modulation d'impulsions en largeur ou modulation de fréquence.

3. Système de pompe de l'une des revendications précédentes, dans lequel un soufflet (5) est placé entre la vanne à tiroir (3) et la pompe (2).

4. Système de pompe de l'une des revendications précédentes, comprenant en outre un clapet de non-retour (11) situé entre la vanne à tiroir (3) et la pompe (2).

5. Système de pompe des revendications 3 et 4, dans lequel le clapet de non-retour (11) est situé entre le soufflet (5) et la vanne à tiroir (3).

6. Système de pompe selon l'une des revendications précédentes, dans lequel l'alimentation en air (4) est un réservoir d'air.

7. Système de pompe selon l'une des revendications précédentes, dans lequel le réducteur est de l'urée.
